(19) Europäisches Patentamt
European Patent Office
Office européen des brevets

(11) Veröffentlichungsnummer: **0 530 693 A1**

# (12) EUROPÄISCHE PATENTANMELDUNG

(21) Anmeldenummer: **92114708.8**

(22) Anmeldetag: **28.08.92**

(51) Int. Cl.5: **C08L 77/00**, C08L 71/12, C08K 3/02, //(C08L77/00,71:12), (C08L71/12,77:00),(C08K3/02, C08L77:00,71:12)

(30) Priorität: **05.09.91 DE 4129500**

(43) Veröffentlichungstag der Anmeldung: **10.03.93 Patentblatt 93/10**

(84) Benannte Vertragsstaaten: **BE DE FR GB IT NL**

(71) Anmelder: **BASF Aktiengesellschaft**
**Carl-Bosch-Strasse 38**
**W-6700 Ludwigshafen(DE)**

(72) Erfinder: **Muehlbach, Klaus**
**Im Zaunruecken 20**
**W-6718 Gruenstadt(DE)**
Erfinder: **Steiert, Peter**
**Madenburgstrasse 10**
**W-6700 Ludwigshafen(DE)**
Erfinder: **Vogel, Wilfried**
**Kropsburgring 7**
**W-6701 Dannstadt-Schauernheim(DE)**
Erfinder: **Kurps, Armin**
**Am Wasserturm 54**
**W-6737 Boehl-Iggelheim(DE)**

## (54) Hochschlagzähe, flammgeschützte Polyphenylenether/Polyamidformmassen.

(57) Flammgeschützte thermoplastische Formmassen enthaltend

A) 5 bis 93,5 Gew.% eines thermoplastischen Polyamids

B) 5 bis 85 Gew.% eines Polyphenylenethers, der bis zu 40 Gew.%, bezogen auf B), durch ein vinylaromatisches Polymer ersetzt sein kann,

C) 0,5 bis 20 Gew.% roten oder schwarzen Phosphor

D) 1 bis 20 Gew.% eines Blockcopolymeren mit einer Härte nach Shore A > 80 aus einem konjugierten Dien und einer vinylaromatischen Verbindung

E) 0 bis 15 Gew.% eines von D) verschiedenen schlagzähmodifizierenden Polymeren,

F) 0 bis 45 Gew.% eines faser- oder teilchenförmigen Füllstoffes oder deren Mischungen,

G) 0 bis 20 Gew.% üblicher Zusatzstoffe in wirksamen Mengen,

wobei sich die Prozentzahlen A) bis G) zu 100 % ergänzen.

EP 0 530 693 A1

Die Erfindung betrifft flammgeschützte thermoplastische Formmassen, enthaltend

A) 5 bis 93,5 Gew.% eines thermoplastischen Polyamids

B) 5 bis 85 Gew.% eines Polyphenylenethers, der bis zu 40 Gew.%, bezogen auf B), durch ein vinylaromatisches Polymer ersetzt sein kann,

c) 0,5 bis 20 Gew.% roten oder schwarzen Phosphor

D) 1 bis 20 Gew.% eines Blockcopolymeren mit einer Härte nach Shore A > 80 aus einem konjugierten Dien und einer vinylaromatischen Verbindung

E) 0 bis 15 Gew.% eines von D) verschiedenen schlagzähmodifizierenden Polymeren,

F) 0 bis 45 Gew.% eines faser- oder teilchenförmigen Füllstoffs oder deren Mischungen,

G) 0 bis 20 Gew.% üblicher Zusatzstoffe,

wobei sich die Prozentzahlen A) bis G) zu 100 % ergänzen.

Außerdem betrifft die Erfindung die Verwendung dieser Formmassen zur Herstellung von Formkörpern und die daraus erhältlichen Formkörper.

Aus der DE-A 38 31 992 und US 4 242 254 sind Polyphenylenether/Polyamidformmassen bekannt, die eine Mischung aus halogenhaltigen Flammschutzmitteln, rotem Phosphor und Stabilisatoren enthalten. Halogenhaltige Verbindungen sind jedoch im Hinblick auf Umweltprobleme nachteilig, da sich bei der verbrennung derartiger Kunststoffe organische hochgiftige Produkte bilden.

Phosphorhaltige verbindungen als Flammschutzmittel für PPE/PA Blends sind aus der EP-A 129 825 bekannt. Die Wirksamkeit dieser Verbindungen ist unzureichend, so daß eine Klassifizierung nach UL 94 sehr hohe Einsatzmengen erfordert.

Da verbindungen wie z.B. Triphenylphosphat gleichzeitig als Weichmacher verwendet werden können, führen hohe Zusatzmengen zu einer verschlechterung der mechanischen Eigenschaften z.B. der zähigkeit und Wärmeformbeständigkeit derartiger Formmassen.

Der Zusatz von rotem Phosphor ist aus der EP-A 384 232, JP-A 63/089567 und JP-A 63/048356 bekannt. Die Zähigkeitseigenschaften dieser Formmassen sind jedoch verbesserungswürdig.

Insbesondere ist für einige Anwendungszwecke auch das Bruchverhalten von geschädigten Formkörpern ausschlaggebend. Gefordert werden neben guten Flammschutzeigenschaften der Formkörper auch eine möglichst große plastische Deformation, bevor der Bruch erfolgt (duktiler Bruch).

Aufgabe der vorliegenden Erfindung war es daher, thermoplastische PPE/PA-Formmassen zur Verfügung zu stellen, die bei möglichst geringen Zusatzmengen eines Flammschutzmittels gute Flammschutzeigenschaften und gleichzeitig eine sehr gute Zähigkeit aufweisen.

Demgemäß wurden die eingangs definierten thermoplastischen Formmassen gefunden. Bevorzugte Massen dieser Art und ihre Verwendung sind den Unteransprüchen zu entnehmen.

Als Komponente A) enthalten die erfindungsgemäßen Formmassen 5 bis 93,5, bevorzugt 30 bis 71 und insbesondere 35 bis 65 Gew.% eines thermoplastischen Polyamids.

Die als Komponente A) verwendeten Polyamide sind an sich bekannt und umfassen die teilkristallinen und amorphen Harze mit Molekulargewichten (Gewichtsmittelwerten) von mindestens 5000, die gewöhnlich als Nylon bezeichnet werden. Solche Polyamide sind z.B. in den amerikanischen Patentschriften 2 071 250, 2 071 251, 2 130 523, 2 130 948, 2 241 322, 2 312 966, 2 512 606 und 3 393 210 beschrieben.

Die Polyamide können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren oder Polymerisation von Lactamen hergestellt werden.

Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam (Nylon 6), Polylaurinsäurelactam, ferner Poly-11-aminoundecansäure und ein Polyamid aus Di(p-aminocyclohexyl)-methan- und Dodecandisäure.

Es ist auch möglich, gemäß der Erfindung Polyamide zu verwenden, die durch Copolykondensation von zwei oder mehr der obengenannten Monomeren oder ihrer Komponenten hergestellt worden sind, z.B. Copolymere aus Adipinsäure, Isophthalsäure oder Terephthalsäure und Hexamethylendiamin (Polyamid 66/6T) oder Copolymere aus Caprolactam, Terephthalsäure und Hexamethylendiamin (Polyamid 6/6T). Derartige teilaromatische Copolyamide enthalten 40 bis 90 Gew.% Einheiten, die sich von Terephthalsäure und Hexamethylendiamin ableiten. Ein geringer Anteil der Terephthalsäure, vorzugsweise nicht mehr als 20 Gew.% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten die sich von ε-Caprolactam ableiten, beträgt bis zu 50 Gew.%, vorzugsweise 20 bis 50 Gew.%, insbesondere 25 bis 40 Gew.%, während der Anteil an Einheiten, die sich von Adipinsäure und Hexamethylendiamin ableiten, bis zu 60 Gew.%, vorzugsweise 30 bis 60 Gew.% und insbesondere 35 bis 55 Gew.% beträgt.

Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.% beträgt, vorzugsweise mindestens 20 Gew.%. Das verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.% Einheiten, die sich von Terephthalsäure und Hexamethylendiamin ableiten und 20 bis 50, vorzugsweise 25 bis 40 Gew.% Einheiten, die sich von ε-Caprolactam ableiten, erwiesen.

Als besonders vorteilhaft für ternäre Copolyamide haben sich Zusammensetzungen aus 50 bis 70 Gew.% Einheiten, die sich von Terephthalsäure und Hexamethylendiamin und 10 bis 20 Gew.% Einheiten, die sich von Adipinsäure und Hexamethylendiamin ableiten sowie 20 bis 30 Gew.% Einheiten, die sich von Isophthalsäure und Hexamethylendiamin ableiten, erwiesen.

Die Herstellung der teilaromatischen Copolyamide kann z.B. nach dem in den EP-A-129 195 und EP 129 196 beschrienen Verfahren erfolgen.

Bevorzugt werden lineare Polyamide mit einem Schmelzpunkt über 200 °C.

Bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen eine relative Viskosität von 2,0 bis 5 auf, bestimmt an einer 1 gew.%igen Lösung in 96 %iger Schwefelsäure bei 23 °C, was einem Molekulargewicht von etwa 15 000 bis 45 000 entspricht. Polyamide mit einer relativen viskosität von 2,4 bis 3,5, insbesondere 2,5 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, E-PA 36 582 und EP-A 39 524 beschrieben.

Es können auch Mischungen verschiedener Polyamide eingesetzt werden.

Als Komponente B) enthalten die erfindungsgemäßen Formmassen 5 bis 85, vorzugsweise 25 bis 65 und insbesondere 30 bis 60 Gew.% eines Polyphenylenethers.

Die Polyphenylenether weisen im allgemeinen ein mittleres Molekulargewicht (Gewichtsmittelwert) im Bereich von 10 000 bis 80 000, vorzugsweise von 20 000 bis 60 000 und insbesondere von 40 000 bis 55 000 auf.

Dies entspricht einer reduzierten spezifischen Viskosität $\eta_{red}$ von 0,2 bis 0,9 dl/g, vorzugsweise von 0,35 bis 0,8 und insbesondere 0,45 bis 0,6, gemessen in einer 0,5 gew.%igen Lösung in Chloroform bei 25 °C.

Die unmodifizierten Polyphenylenether $b_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein α-ständiges tertiäres wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2, 3, 6-Trimethylphenol. Selbstverständlich können auch Gemische verschiedener Polyphenylenether eingesetzt werden.

Die als Komponente $b_1$) verwendeten Polyphenylenether können gegebenenfalls verfahrensbedingte Fehlstellen enthalten, die beispielsweise bei White et al., Macromolecules 23, 1318-1329 (1990) beschrieben sind.

Vorzugsweise werden solche Polyphenylenether eingesetzt, die mit vinylaromatischen Polymeren verträglich, d.h. ganz oder weitestgehend in diesen Polymeren löslich sind (vgl. A. Noshay, Block Copolymers, s. 8 bis 10, Academic Press, 1977 und 0. Olabisi, Polymer-Polymer Miscibility, 1979, S. 117 bis 189).

Beispiele für Polyphenylenether sind Poly(2,6-dilauryl-1,4-phenylen)ether,Poly(2,6-diphenyl-1,4-phenylen)ether, Poly(2,6-dimethoxi-1,4-phenylen)-ether, Poly(2,6-diethoxi-1,4-phenylen)ether, Poly(2-methoxi-6-ethoxi-1,4-phenylen)ether, Poly(2-ethyl-6-stearyloxi-1,4-phenylen)ether, Poly(2,6-dichlor-1,4-phenylen)ether,

Poly(2-methyl-6-phenyl-1,4-phenylenether, Poly(2,6-dibenzyl-1,4-phenylen)ether, Poly(2-ethoxi-1,4-phenylen)ether, Poly(2-chlor-1,4-phenylen)ether, Poly(2,5-dibrom-1,4-phenylen)ether. Bevorzugt werden Polyphenylenether eingesetzt, bei denen die Substituenten Alkylreste mit 1 bis 4 Kohlenstoffatomen sind, wie Poly-(2,6-dimethyl-1,4-phenylen)ether, Poly(2,6-diethyl-1,4-phenylen)ether, Poly(2-methyl-6-ethyl-1,4-phenylen)-ether, Poly(2-methyl-6-propyl-1,4-phenylen)ether, Poly-(2,6-dipropyl-1,4-phenylen)ether und Poly(2-ethyl-6-propyl-1,4-phenylen)-ether.

Weiterhin sind Pfropfcopolymere aus Polyphenylenether und vinylaromatischen Polymeren wie Styrol, α-Methylstyrol, Vinyltoluol und Chlorstyrol geeignet.

Funktionalisierte oder modifizierte Polyphenylenether sind an sich bekannt, z.B. aus WO-A 86/02086, WO-A 87/00540, EP-A-222 246, EP-A-223 116 und EP-A-254 048.

Üblicherweise wird ein unmodifizierter Polyphenylenether $b_1$) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem Polyamid (Komponente A) gewährleistet ist.

Die Modifizierung wird im allgemeinen durch Umsetzung eines unmodifizierten Polyphenylenethers $b_1$) mit einem Modifiziermittel, das mindestens eine der oben genannten Gruppen und mindestens eine C-C-Doppel- oder C-C-Dreifachbindung enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($b_3$) sind beispielsweise Maleinsäure, Methylmaleinsäure, Itaconsäure, Tetrahydrophthalsäure, deren Anhydride und Imide, Fumarsaüre, die Mono- und Diester dieser Sauren, z.B. von $C_1$- und $C_2$- bis $C_8$-Alkanolen ($b_{31}$), die Mono- oder Diamide dieser Säuren wie N-Phenylmaleinimid (Monomere $b_{32}$), Maleinhydrazid. Weiterhin seien beispielsweise N-Vinylpyrrolidon und (Meth)-acryloylcaprolactam ($b_{33}$)) genannt.

Eine andere Gruppe von Modifiziermitteln umfaßt beispielsweise das Säurechlorid des Trimelithsäureanhydrids, Benzol-1,2-dicarbonsäureanhydrid-4-carbonsäure-essigsäureanhydrid, Pyromelithsäureanhydrid, Chlorethanoylsuccinaldehyd, Chlorformylsuccinaldehyd, Zitronensäure und Hydroxysuccinsäure.

Bevorzugt wird in den erfindungsgemäßen Formmassen als Komponente B) ein modifizierter Polyphenylenether eingesetzt, der durch Umsetzen von

- $b_1$) 70 bis 99,95, bevorzugt 76,5 bis 99,94 Gew.% eines unmodifizierten Polyphenylenethers,
- $b_2$) 0 bis 40, bevorzugt 0 bis 20 Gew.% eines vinylaromatischen Polymeren,
- $b_3$) 0,05 bis 10, bevorzugt 0,05 bis 5 Gew.% mindestens einer Verbindung aus der Gruppe gebildet aus
  - $b_{31}$) einer α,ß-ungesättigten Dicarbonylverbindung,
  - $b_{32}$) eines Amid-Gruppen enthaltenden Monomeren mit einer polymerisierbaren Doppelbindung und
  - $b_{33}$) eines Lactam-Gruppen enthaltenden Monomeren mit einer polymerisierbaren Doppelbindung,
- $b_4$) 0 bis 5, bevorzugt 0,01 bis 0,09 Gew.% eines Radikalstarters

wobei sich die Gewichtsprozente auf die Summe von $b_1$) bis $b_4$) beziehen, im Verlaufe von 0,5 bis 15 Minuten bei 240 bis 375 °C in geeigneten Misch- und Knetaggregaten wie Zweischneckenextrudern erhältlich ist.

Das vinylaromatische Polymer $b_2$) soll vorzugsweise mit dem eingesetzten Polyphenylenether verträglich sein.

Das Molekulargewicht dieser an sich bekannten Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, α-Methylstyrol und p-Methylstyrol genannt; in untergeordneten Anteilen (vorzugsweise nicht mehr als 20, insbesondere nicht mehr als 8 Gew.%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Als Radikalstarter $b_4$) seien genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di (tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

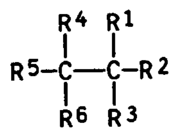

wobei $R^1$ bis $R^6$ Alkylgruppen mit 1 bis 8 C-Atomen, Alkoxygruppen mit 1 bis 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2, 2, 3, 3-Tetraphenylbutan.

Besonders bevorzugte Polyphenylenether B) in den erfindungsgemäßen Formmassen werden durch Modifizierung mit Maleinsäure, Maleinsäureanhydrid und Fumarsäure erhalten. Derartige Polyphenylenether weisen vorzugsweise eine Säurezahl von 1,8 bis 3,2, insbesondere von 2,0 bis 3,0 auf.

Die Säurezahl ist ein Maß für den Modifizierungsgrad des Polyphenylenethers und wird im allgemeinen durch Titration mit Basen unter Inertgasbedingungen bestimmt.

Die Säurezahl entspricht allgemein der Menge an Base in mg, welche zur Neutralisation von 1 g eines derart säuremodifizierten Polyphenylenethers B) benötigt wird (nach DIN 53 402).

Die erfindungsgemäßen Formmassen enthalten als Komponente C) 1 bis 20 Gew.%, bevorzugt 1 bis 10 und insbesondere 1 bis 6 Gew.% roten oder schwarzen Phosphor.

Bevorzugtes Flammschutzmittel (C) ist elementarer roter Phosphor, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure oder Adipinsäure oder mit polymeren oder oligomeren Verbindungen, z.B. mit Phenolharzen oder Aminoplasten sowie Polyurethanen beschichtet sind.

Außerdem sind Konzentrate von rotem Phosphor, z.B. in einem Polyamid oder Elastomeren als Flammschutzmittel geeignet. Insbesondere eignen sich Polyolefinhomo- und -copolymere als Konzentratpolymere. Jedoch sollte der Anteil des Konzentratpolymeren nicht mehr als 35 Gew.% bezogen auf das Gewicht der Komponenten (A) bis (D) in der erfindungsgemäßen Formmasse betragen.

Die mittlere Teilchengröße ($d_{50}$) der in den Formmassen verteilten Phosphorpartikel liegt bevorzugt im Bereich von 0,0001 bis 0,5 mm; insbesondere von 0,001 bis 0,2 mm.

Als Komponente D) enthalten die erfindungsgemäßen thermoplastischen Formmassen 1 bis 20, bevorzugt 3 bis 18 und insbesondere 4 bis 12 Gew.% eines Blockcopolymeren aus einem konjugierten Dien und einer vinylaromatischen Verbindung mit einer Härte nach Shore A > 80, bevorzugt > 82 und insbesondere > 85.

Die Messung der Härte nach Shore A erfolgt nach DIN 53 505. Im allgemeinen versteht man hierbei unter dem Begriff der Härte des Elastomeren eine Meßgröße, die sich aus dem Widerstand gegen das Eindringen eines Körpers bestimmter Form und Ausmaße unter definierter Druckkraft bei 23 °C in einem Formkörper ergibt. Entsprechend werden ganze Zahlen als Meßwerte erhalten, die einer Relativskala zugeordnet werden (0 = sehr weiche Oberfläche bis 100 = sehr harte Oberfläche).

Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, haben sich als besonders geeignet erwiesen.

Bevorzugt werden Blockkautschuke, bei denen mindestens ein Block, vorzugsweise zwei Blöcke, aus vinylaromatischen Monomeren wie Styrol, $\alpha$-Methylstyrol, Vinyltoluol, Vinyl- oder Isopropenylnaphthalin aufgebaut ist. Polystyrol als vinylaromatischer Block ist besonders bevorzugt, insbesondere als Endblock.

üblicherweise enthalten diese bevorzugten Blockcopolymere weiterhin einen elastomeren Block, der durch eine Glastemperatur von weniger als -30 °C charakterisiert ist. Dieser Block leitet sich z.B. von konjugierten Dienen wie Butadien, Isopren, 1,3-Pentadien oder 2,3-Dimethylbutadien ab.

Die übergänge zwischen den einzelnen Blöcken können sowohl scharf als auch verschmiert sein.

Vorzugsweise handelt es sich bei den Kautschuken, die die Zähigkeit von Polyphenylenethern erhöhen, um lineare Blockcopolymere der allgemeinen Struktur A-B, A-B-A' und insbesondere A-B-A'-B', wobei A

und A' den vinylaromatischen Block, vorzugsweise Polystyrol, darstellen und B und B' den elastomeren Block, der vorzugsweise aus Butadien und/oder Isopren aufgebaut ist.

Derartige Blockcopolymere sind im Handel erhältlich (Tufprene® der Firma Asahi Chem. Ind. JP).

Der Styrolgehalt der Blockcopolymeren C) beträgt im allgemeinen 35 bis 48, vorzugsweise 38 bis 45 Gew.%, bezogen auf den Gesamtgehalt der Komponente C).

Neben den wesentlichen Komponenten A) bis D) können die erfindungsgemäßen Formmassen 0 bis 15, bevorzugt 3 bis 15 und insbesondere 5 bis 15 Gew.% eines von D) verschiedenen schlagzähmodifizierenden Polymeren E) enthalten.

Es können übliche Schlagzähmodifier E) verwendet werden, die für Polyamide (Komponente A) geeignet sind und Kautschuke E), die üblicherweise Polyphenylenether B) schlagzähmodifizieren, jedoch verschieden von C) sind.

Als Kautschuke, die die Zähigkeit von Polyphenylenethern erhöhen, seien z.B. folgende genannt: Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Ferner können Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, eingesetzt werden, die verschieden von D) sind, d.h. eine Shore A-Härte bis zu 80 aufweisen.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US-A 4 085 163, US-A 4 041 103, US-A 3 149 182, US-A 3 231 635 und US-A 3 462 162 verwiesen.

Bevorzugt sind Formmassen, die keine weiteren Blockcopolymere enthalten.

Auch im Handel sind entsprechende Produkte erhältlich, z.B. ein Polyoctylen der Bezeichnung Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Kraton®- G-Typen (Shell), die Finaprene®-Typen (Fina) und die Europrene®-SOL-TR-Typen (Enichem) genannt.

Kautschuke, die die Zähigkeit von Polyamiden erhöhen, weisen i.a. zwei wesentliche Merkmale auf: sie enthalten einen elastomeren Anteil, der eine Glastemperatur von weniger als -10 °C, vorzugsweise von weniger als -30 °C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:
EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25 °C, unter einem weichen Bestandteil ein Polymerisat mit einer Glastemperatur von höchstens 0 °C. Diese Produkte weisen eine Struktur aus einem Kern und mindestens

einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, $\alpha$-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.%, vorzugsweise 0,25 bis 15 Gew.%, bezogen auf das Gesamtgewicht des kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern E) sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekinlaren Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als Komponente F) können die erfindungsgemäßen Formmassen 0 bis 45, vorzugsweise von 10 bis 40 Gew.% faser- oder teilchenförmige Füllstoffe oder deren Mischungen enthalten. Als Beispiele für Füllstoffe seien Kohlenstoff- oder Glasfasern in Form von Glasgeweben, Glasmatten oder Glasseidenrovings, Glaskugeln sowie Wollastonit genannt.

Bevorzugte faserförmige Verstärkinngsstoffe (Komponente F) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) oder dem modifizierten Polyphenylenether (B) mit einer Schlichte und einem Haftvermittler ausgerüstet sein. Im allgemeinen haben die verwendeten Kohlenstoff- und Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe (Komponente F) eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Neben den wesentlichen Komponenten A) bis D) sowie gegebenenfalls E) bis F) können die erfindungsgemäßen Formmassen übliche Zusatzstoffe und Verarbeitungshilfsmittel G) enthalten. Deren Anteil beträgt im allgemeinen bis zu 20, vorzugsweise bis zu 10 Gew.%, bezogen auf das Gesamtgewicht der Komponenten A bis E.

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zingesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Materialien zur Erhöhung der Abschirmung gegen elektromagnetische Wellen, wie Metallflocken, -pulver, -fasern, metallbeschichtete Füllstoffe und leitfähige Polymere können mitverwendet werden.

Gleit- und Entformungsmittel, die in der Regel in Mengen bis zu 1 Gew.% der thermoplastischen Masse zingesetzt werden, sind Stearinsäure, Stearylalkohol, Stearinsäurealkylester und -amide sowie Ester des Pentaerythrits mit langkettigen Fettsäuren.

Ferner ist es vorteilhaft zur Reduzierung der Wasseraufnahme des Polyamids monophenolische Verbindungen wie 2- bzw. 4-t-Butylphenol oder Dihydroxydiphenyle und deren Derivate in Mengen bis zu 8 Gew.% zuzusetzen.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen erhält man zweckmäßig durch Mischen der Einzelkomponenten bei Temperaturen von 270 bis 350°C in üblichen Mischvorrichtungen, wie Knetern, Banbury-Mischern und Einschneckenextrinder, vorzugsweise jedoch mit einem Zweischneckenextruder. Um eine möglichst homogene Formmasse zu erhalten, ist eine intensive Durchmischung notwendig. Die Abmischreihenfolge der Komponenten kann variiert werden, so können zwei oder gegebenenfalls drei Komponenten vorgemischt werden, es können aber auch alle Komponenten gemeinsam gemischt werden.

Es sei erwähnt, daß bei der Herstellung der Formmassen eine Reaktion zwischen den Komponenten A) bis D), insbesondere zwischen A) und B), auftreten kann, so daß im Endprodukt keine reine Mischung dieser Komponenten mehr vorliegt.

Die erfindungsgemäßen Formmassen zeichnen sich durch ihre ausgewogenen Flammschutz-Eigenschaften, insbesondere aber durch ihre sehr gute Zähigkeit aus.

Sie eignen sich besonders zur Herstellung von Formkörpern durch Spritzguß oder Extrusion, insbesondere für thermisch beanspruchte Teile im Automobilbereich. Im letzteren Anwendungsgebiet ist besonders von Vorteil, daß die aus den erfindungsgemäßen Formmassen hergestellten Teile aufgrund ihrer guten Zähigkeit, insbesondere auch bei tiefen Temperaturen eine gute Zähigkeit zeigen.

Beispiele

Komponente A

Polyhexamethylenadipinsäureamid mit einem K-Wert nach Fikentscher von 70; gemessen in einer 1 gew.%igen Lösung von 96 gew.%iger Schwefelsäure bei 25°C. Dieser K-Wert entspricht einer relativen Viskosität von 2,5 oder einer Viskositätszahl von 133 ml/g.

Komponente B/1

Ein modifizierter Polyphenylenether aus

| | |
|---|---|
| 90 Gew.% | Poly(2,6-dimethyl-1,4-phenylen)ether ($\eta_{red}$ = 0,58, gemessen in einer 0,5 gew.%igen Lösung in Chloroform bei 25°C), |
| 9 Gew.% | Polystyrol (Schmelzfließindex MFI bei 200°C 5 kg Belastung: 24 g/min), |
| 1 Gew.% | Fumarsäure |

wurde durch Mischen der Komponenten bei Temperaturen von 290 bis 310°C in einem Zweischneckenextruder mit anschließender Entgasung hergestellt. Die Schmelze wurde durch ein Wasserbad geleitet, granuliert und getrocknet.

Komponente B/2

Ein modifizierter Polyphenylenether aus

| | |
|---|---|
| 88 Gew.% | Poly(2,6-dimethyl-1,4-phenylen)ether ($\eta_{red}$ = 0,63, gemessen in einer 1 gew.%igen Lösung in Chloroform bei 25 ° C), |
| 10 Gew.% | Polystyrol (Schmelzfließindex MFI bei 200 ° C 5 kg Belastung: 24 g/min), |
| 2 Gew.% | Maleinsäureanhydrid |

wurde durch Mischen der Komponenten bei Temperaturen von 290 bis 310 ° C in einem Zweischneckenextruder mit anschließender Entgasung hergestellt. Die Schmelze wurde durch ein Wasserbad geleitet, granuliert und getrocknet.

Komponente C/1

Roter Phosphor der mittleren Teilchengröße ($d_{50}$) von 10 bis 30 µm.

Der Phosphor wurde mit Polyurethan (Astacin® Finish PUD, BASF Aktiengesellschaft) phlegmatisiert. Dazu wurden 500 ml einer wäßrig-alkalischen Phosphorsuspension mit einem Gehalt von 250 g rotem Phosphor (Teilchengröße 0,001 bis 0,4 mm) auf 60 ° C erwärmt und durch Zugabe von 5 %iger Schwefelsäure auf einen pH-Wert von 8 eingestellt.

Dann wurden 6,5 g Astacin® Finish PUD (40 %ige wäßrige, anionische Polyester-Polyinrethan-Dispersion, die gemäß DE-C3-26 45 779 hergestellt wurde) eingerührt. Die Suspension wurde anschließend 1 Stunde bei 60 ° C gerührt und danach filtriert. Der Filterrückstand wurde mit Wasser gewaschen und anschließend bei 100 ° C im Stickstoffstrom getrocknet. Der Polyurethangehalt betrug 1 Gew.%.

Komponente C/2

Roter Phosphor der mittleren Teilchengröße ($d_{50}$) von 45 µm (Exolit® 385, Fa. Hoechst). Der Phosphor enthielt 0,5 Gew.% Dioctylphthalat als Beschichtungsmittel.

Komponente D/1

Vierblockkautschuk (S-B-S'-B') mit einem Styrolgehalt von 42 %, einem Butadiengehalt von 58 % und einer Härte Shore A von 87 (Tufprene® A der Asahi Chem)

Komponente D/2*)

Dreiblockkautschuk (S-B-S') mit einem Styrolgehalt von 29 %, einem Butadiengehalt von 71 % und einer Härte Shore A von 70 (Cariflex® TR 1102 der Shell)

Komponente D/3*)

Dreiblockkautschuk (S-EB-S') mit einem Styrolgehalt von 29 %, einem Gehalt an hydriertem Butadien von 71 % und einer Härte Shore A von 75 (Kraton® G 1650 der Shell)

Komponente D/4*)

Zweiblockkautschuk (S-EP) mit einem Styrolgehalt von 37 %, einem Gehalt an hydriertem Isopren von 63 % und einer Härte Shore A von 72 (Kraton® G 1701 der Shell)

Komponente G)

Zinkoxid

Herstellung der Formmassen

Die Komponenten wurden auf einem Zweischneckenextruder bei einer Zylindertemperatur von 290 °C abgemischt und in ein Wasserbad extrudiert. Komponente D wurde dabei erst in der Schmelze zugegeben. Nach Granulierung und Trocknung wurden auf einer Spritzgußmaschine Prüfkörper gespritzt und geprüft.

Es wurden folgende Messungen durchgeführt:

| | |
|---|---|
| Izod-Kerbschlagzähigkeit ($a_k$) [kJ/m$^2$] | ISO 180/4A |
| Durchstoßarbeit ($W_s$) [Nm] | DIN 53 443 |
| Flammschutzprüfung | UL-94 |

Die Flammschutzprüfung erfolgte im vertikalen Brandtest nach den Vorschriften der Underwriter Laboratories zwecks Einordnung in eine der Brandklassen UL 94 VO, V1 oder V2.

Die Einstufung eines flammgeschützten Thermoplasten in die Brandklasse UL 94 V0 erfolgt, wenn folgende Kriterien erfüllt sind: Bei einem Satz von 5 Proben der Abmessungen 127 x 12,7 x 3,2 mm dürfen alle Proben nach zweimaliger Beflammung von 10 s Zeitdainer mit einer offenen Flamme (Höhe 19 mm) nicht länger als 10 s nachbrennen. Die Summe der Nachbrennzeiten bei 10 Beflammungen von 5 Proben darf nicht größer sein als 50 s. Es darf kein brennendes Abtropfen, vollständiges Abbrennen oder ein Nachglühen von länger als 30 s erfolgen. Die Einstufung in die Brandklasse UL 94 V1 erfordert, daß die Nachbrennzeiten nicht länger als 30 s sind und daß die Summe der Nachbrennzeiten von 10 Beflammungen von 5 Proben nicht größer als 250 s ist.

Das Nachglühen darf nie länger als 60 s dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 91 V1 zu brennendem Abtropfen kommt.

Die Zusammensetzungen der Formmassen und die Ergebnisse der Messungen sind der Tabelle zu entnehmen.

Tabelle

| Beispiele | Zusammensetzung der Formmassen [Gew.%] | | | | | $a_k$ [kJ/m2] 23°C | $W_s$ [Nm] | UL 94 (1/16') |
|---|---|---|---|---|---|---|---|---|
| 1 | 46 A | 40,6 B/1 | 2,7 C/2 | 10 D/1 | 0,7 G | 17 | 34 | V-0 |
| I | 46 A | 40,6 B/1 | 2,7 C/2 | 10 D/2* | 0,7 G | 12 | 28 | V-0 |
| IIa) | 46 A | 40,6 B/1 | 2,7 C/2 | 10 D/3* | 0,7 G | 12 | 13 | Einstufung nicht erreicht |
| III | 46 A | 40,6 B/1 | 2,7 C/2 | 10 D/4* | 0,7 G | 16 | 33 | Einstufung nicht erreicht |
| IVb) | 46,6 A | 41,7 B/2 | 2 C/1 | 10 D/2* | - | 15 | - | V-0 |
| Vb) | 46,1 A | 40,9 B/2 | 3 C/2 | 10 D/2* | - | 9 | - | V-0 |

*) zum Vergleich
a) Vergleichsbeispiel gemäß der Lehre der JP-A 63/089 567
b) Vergleichsbeispiel gemäß der Lehre der EP-A 384 232

Es ergibt sich mit der erfindungsgemäßen Kombination des Blockcopolymeren und Phosphor in den Formmassen eine V-0 Klassifizierung mit guter Zähig-keit. Dies ist insofern unerwartet, da das Blockcopolymere mit der höchsten Härte nach Shore A die zäheren Formkörper mit gleichzeitig guten Flammschutzeigenschaften in Kombination mit rotem Phosphor ergibt. Bei Verwendung von hydrierten Blockcopolymeren (siehe Beispiele II und III) und geringen Phosphormengen ist eine Einstufung nach UL-94 nicht möglich.

## Patentansprüche

1. Flammgeschützte thermoplastische Formassen, enthaltend
   A) 5 bis 93,5 Gew.% eines thermoplastischen Polyamids
   B) 5 bis 85 Gew.% eines Polyphenylenethers, der bis zu 40 Gew.%, bezogen auf B), durch ein vinylaromatisches Polymer ersetzt sein kann,
   C) 0,5 bis 20 Gew.% roten oder schwarzen Phosphor
   D) 1 bis 20 Gew.% eines Blockcopolymeren mit einer Härte nach Shore A > 80 aus einem konjugierten Dien und einer vinylaromatischen Verbindung
   E) 0 bis 15 Gew.% eines von D) verschiedenen schlagzähmodifizierenden Polymeren,
   F) 0 bis 45 Gew.% eines faser- oder teilchenförmigen Füllstoffes oder deren Mischungen,
   G) 0 bis 20 Gew.% üblicher Zusatzstoffe in wirksamen Mengen,
   wobei sich die Prozentzahlen A) bis G) Zu 100 % ergänzen.

2. Flammgeschützte thermoplastische Formmassen nach Anspruch 1, enthaltend
   A) 30 bis 71 Gew.%
   B) 25 bis 65 Gew.%
   C) 1 bis 10 Gew.%
   D) 3 bis 18 Gew.%.

3. Flammgeschützte thermoplastische Formmassen nach den Ansprüchen 1 oder 2, in denen das Blockcopolymere C) aus mindestens zwei Blöcken eines vinylaromatischen Polymeren und mindestens einem Block eines konjugierten Dienpolymeren aufgebaut ist.

4. Flammgeschützte thermoplastische Formmassen nach den Ansprüchen 1 bis 3, in denen das Blockcopolymere C) die allgemeine Formel A-B-A'-B' aufweist, wobei A und A' den vinylaromatischen Block sowie B und B' den elastomeren Block eines konjugierten Diens darstellen.

5. Flammgeschützte thermoplastische Formmassen nach den Ansprüchen 1 bis 4, in denen der Polyphenylenether B) hergestellt ist aus
   $b_1$) 70 bis 99,95 Gew.% eines Polyphenylenethers,
   $b_2$) 0 bis 40 Gew.% eines vinylaromatischen Polymeren,
   $b_3$) 0,05 bis 5 Gew.% mindestens einer Verbindung, die mindestens eine Doppel- oder Dreifachbindung und mindestens eine funktionelle Gruppe, ausgewählt aus der Gruppe der Carbonsäureamide, Epoxide, Oxazoline oder Urethane enthält.

6. Flammgeschützte thermoplastische Formmassen nach Anspruch 5, dadurch gekennzeichnet, daß die Komponente $b_3$) Maleinsäure, Maleinsäureanhydrid oder Fumarsäure ist.

7. Verwendung der thermoplastischen Formmassen gemäß den Ansprüchen 1 bis 6 zur Herstellung von Formkörpern, Fasern oder Folien.

8. Formkörper, hergestellt aus Formmassen gemäß den Ansprüchen 1 bis 6.

Europäisches Patentamt

# EUROPÄISCHER RECHERCHENBERICHT

Nummer der Anmeldung

EP 92 11 4708

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 14, Nr. 232 (C-0719), 17. Mai 1990; & JP-A-2 058 563 (ENG. PLAST.) 27-02-1990 & US-A-5 104 937 (A. SAITO et al.)(14-04-1992)<br>--- | | C 08 L 77/00<br>C 08 L 71/12<br>C 08 K 3/02 //<br>(C 08 L 77/00<br>C 08 L 71:12 )<br>(C 08 L 71/12<br>C 08 L 77:00 )<br>(C 08 K 3/02<br>C 08 L 77:00<br>C 08 L 71:12 ) |
| A | EP-A-0 234 063 (GENERAL ELECTRIC)<br>* Ansprüche *<br>--- | | |
| A | EP-A-0 236 593 (GENERAL ELECTRIC)<br>* Ansprüche *<br>--- | | |
| D,A | EP-A-0 384 232 (BASF)<br>----- | | |
| | | | **RECHERCHIERTE SACHGEBIETE (Int. Cl.5)** |
| | | | C 08 L<br>C 08 K |

Der vorliegende Recherchenbericht wurde für alle Patentansprüche erstellt

| Recherchenort | Abschlußdatum der Recherche | Prüfer |
|---|---|---|
| DEN HAAG | 18-12-1992 | LEROY ALAIN |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)